# EUROPEAN PATENT SPECIFICATION

(11) **EP 0 665 276 B1**
(45) Date of publication and mention of the grant of the patent: **27.09.2000**
(21) Application number: 95105606.8
(22) Date of filing: 15.03.1990
(51) Int. Cl.: C09D 5/02, C08F 220/28, C08F 283/10

(54) **The use of steric stabiliser with particles of film-forming polymer**
Verwendung eines sterischen Stabilisators mit Teilchen aus filmbindendem Polymer
Utilisation d'un stabilisant stérique avec des particules de polymère filmogène

(30) Priority: 23.03.1989 AU PJ339189
(43) Date of publication of application: 02.08.1995
(62) Divisional of application: 90302756.3
(73) Proprietor: Orica Australia Pty Ltd, Melbourne, Victoria 3002 (AU)
(72) Inventor: Anderson, Geoffrey Bruce, Richmond, Victoria 3121 (AU); Bignell, David Scott, Maidenhead, Berkshire SL6 8ES (GB); Cook, Iain Bruce, West Brunswick, Victoria 3055 (AU); Leary, Bruce, Red Hill, Victoria 3937 (AU); Lyons, Christoper John, Burford, Victoria 3125 (AU)
(74) Representative: Harrison, Ivor Stanley

(56) References cited:
- US-A- 4 547 481

## Description

This invention relates to the use of an alkoxylated steric stabiliser containing polyoxyalkylene chains to impart a core-sheath structure to particles of film-forming polymer to enable them to form a stable aqueous dispersion suitable for use in an aqueous coating composition such as a paint. It also relates to the sterically stabilised particles themselves.

Steric stabilisation is also knob as "non-ionic stabilisation" and its use in aqueous surface coating compositions is described in Volume 1 of the second edition of the book "Surface Coatings" published in 1983 by TAFE Educational Books of Randwick Australia (see Chapter 18, pages 171 to 174). In particular, the book refers to the stabilisation of polymer particles of up to 3µm (3000 nm) particle size by, for example, polyoxyethylene ethers of various non-ethylenically unsaturated alcohols such as cetyl alcohol. These ethers are often called "ethoxylated alcohols".

Steric stabilisation provides one means of stabilisation of disperse particles in liquid continuous media with which the material of the particles is incompatible. In this technique, the disperse particles comprise at their surface chemical species which are solvatable by the continuous phase and which accordingly form a solvated stabilising sheath around the particles. Steric stabilisation can be used either in aqueous or non-aqueous media. The first extensive use of steric stabilisation was in the field of dispersion polymerisation in non-aqueous media and the background and details are well described in the authoritative text "Dispersion Polymerization in Organic Media" (K E J Barrett, Ed., Wiley-Interscience, 1975). On page 39 of this text, Barrett describes the stability of such a system to be the result of a "sheath of soluble polymer chains", hence the description of the particles which are stabilised by a steric stabilisation mechanism as "core-sheath" particles.

A further authoritative reference in the field is "Polymeric Stabilization of Colloidal Dispersions" by D H Napper (Academic Press, 1983). On page 14, Napper presents a schematic representation of steric stabilisation which clearly shows the core-sheath structure of the particles. It is worth noting that the other common method of particle stabilisation, ionic stabilisation, does not involve the provision of such a sheath.

Much of the work in the field has been done with non-aqueous dispersions, but more recently there has been interest in using steric stabilisation in aqueous media. The advantages of steric stabilisation in aqueous media are considerable. For example, sterically-stabilised dispersions are relatively insensitive to pH changes and to the presence of electrolytes. One practical advantage attainable in the surface coatings field is enhanced freeze-thaw stability. Typical disclosures in the field of aqueous dispersions are provided by United States Patent Specification US 4 221 685 and British Patent Specification GB 2 131 430A.

Both US 4 221 685 and GB 2 131 430A describe the use of a steric (or "non-ionic") stabiliser containing polyoxyalkylene chains (also called "alkoxylated stabilisers") to enable particles of film-forming polymers to form a stable aqueous dispersion suitable for use in an aqueous coating composition such as a paint. US 4 221 685 particularly refers to dispersions of film-forming alkyd polymers whereas GB 2 131 430A refers to polymers in general since the technique is applicable to any polymer particles which are incompatible with the liquid continuous media in which they are to be dispersed. Both US 4 221 685 and GB 2 131 430A disclose the presence of allylic groups (ie terminal or pendant ethylenic unsaturation comprising double bonds) as essential components of their steric stabilisers. GB discloses the use of eugenol (ie a naturally occurring aromatic mono-allylic compound as shown below) as one possible steric stabiliser, but otherwise both US 4 221 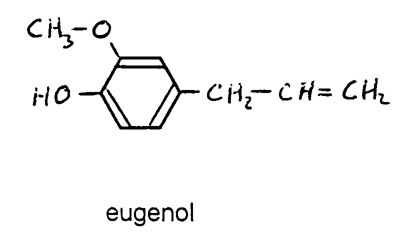 685 and GB 2 131 430A disclose non-naturally occurring multi-allylic compounds as their steric stabilisers. The polyoxyalkylene alkoxylating moieties must contain from, for example, 5 to 25 units derived from ethylene oxide although GB 2 131 430A does allow the possibility of a minor proportion of oxypropylene or oxybutylene unit being used to adjust the degree of hydrophilicity of the chains.

Eugenol has the known disadvantages of being expensive to extract from renewable resources (eg clove oil), of producing aromatic (and therefore environmentally less friendly) residues when waste quantities of it are bio-degraded and of being slow to react in copolymerisations. The multi-allylic compounds are non-naturally occurring and therefore manufacture is expensive and involves the use of non-renewable resources. In addition they are not easily bio-degradable and the presence of multiple terminal or pendant double bonds causes unpredictable degrees of crosslinking.

Long chain fatty alcohols have been commercially available as "Ocenol" 110-130 since at least 1984. The "Ocenols" are described for example in the second edition of the sales brochure "Dehydag CD" published in 1984 by Henkel KGaA of Düsseldorf in Germany. The brochure describes "Ocenol" 110-130 as being "Oleyl-linoleyl alcohol" which is in fact a mixture of two C₁₈ straight chain unsaturated alcohols containing non-terminal and non-pendant ethylenic double bonds. Linoleyl alcohol of course contains two such double bonds.

The commercial preparation of polyoxyethylene alcohols including mono-unsaturated alcohols (also known as the "alkoxylation of alcohols") has been known for decades and is described by Satkowski et a in the book "Non-ionic Surfactants" edited by M J Schick and published in 1967 by Edward Arnold of London (see pages 92 and 93). Satkowski et al describe the predominant commercial process as comprising the reaction of an alcohol with ethylene oxide in the presence of a basic catalyst. Catalysts such as sodium or potassium hydroxides or sodium methoxide or ethoxide are mentioned as are temperatures of from 135 to 200°C. Nowadays such alcohols are used as biodegradable steric (or non-ionic) stabilisers.

US 4 221 685, GB 2 131 430A and Satkowski et al all indicate the length of general interest there has been in using steric stabilisers to make aqueous dispersions of particles of film-forming polymers. More recently there has been interest in making dispersions of smaller polymer particles of, for example, below 100 nanometres (nm) (0.1 micron) for a variety of reasons. In the field of surface coatings, the smaller the particle size of the film-former, the better the penetration into porous substrates and the more nearly the gloss level of the resultant film approaches that of coating compositions wherein the film is laid down from solution. There has been a particular interest in water-borne coating compositions which have a high gloss level and good rheology. An example of such a system is found in United States Patent No. 3,740,367 wherein 95% of the particles are stated to have diameters of less than 100nm.

However, the compositions disclosed in the document (which are not core-sheath particles) rely on ionic stabilisation which of course does not provide the benefits obtainable by steric stabilisation. This may have been the reason for the lack of commercial success of compositions based on US 3, 740,367.

US-A-4547481 describes an initiator for polymerisation of ethylenically unsaturated monomers such as vinyl chloride, the initiator being in the form an aqueous dispersion containing an ethoxylated nonionic emulsifier, especially an ethoxylated alkylphenol fatty alcohol or fatty acid.

It has now been found that it is possible to use steric stabilisers containing polyoxyalkylene chains to impart a core-sheath structure to particles of film-forming polymer to enable them to form a stable aqueous dispersion suitable for use in an aqueous coating composition even when the particles are very small, namely those which are on average less 100nm in diameter. Moreover, this can be achieved without having to employ aromatic moieties or multiple terminal or pendant ethylenic double bonds which either produce aromatic biodegradation products or else are not easily biodegradable. Accordingly this invention provides for the use of a steric stabiliser containing polyoxyalkylene chains to impart a core-sheath structure to particles of film-forming polymer to enable them to form a stable aqueous dispersion suitable for use in an aqueous coating composition wherein the core part of the structure contains a film-forming addition polymer and the sheath part contains the polyoxyalkylene chains and wherein.
a) the polyoxyalkylene chains have an average length of 6 to 40 oxyalkylene units per chain,
b) at least 20% of the chains are covalently bonded to a core and
c) sufficient steric stabiliser is used to ensure that the mass ratio of core to sheath is from 98:2 to 60:40.
in which the polyoxyalkylene chains are moieties in an alkoxylated ethylenically unsaturated fatty alcohol which alcohol contains 18 carbon atoms and in which the ethylenic unsaturation is provided by more than one ethylenic double bond (preferably two) per fatty alcohol molecule which double bonds are neither terminal nor pendant.

The invention also provides sterically stabilised particles of film-forming polymer having a core-sheath structure able to form a stable aqueous dispersion suitable for use in an aqueous coating composition wherein the core part of the structure contains a film-forming addition polymer and the sheath part contains polyoxyalkylene chains and
a) the polyoxyalkylene chains have an average length of 6 to 40 oxyalkylene units per chain,
b) at least 20% of the chains are covalently bonded to a core and
c) the mass ratio of core to sheath is from 98:2 to 60:40 ,
in which the polyoxyalkylene chains are moieties derived from an alkoxylated ethylenically unsaturated fatty alcohol containing 18 carbon atoms in which the ethylenic unsaturation is provided by more than one ethylenic double bond (preferably two) per fatty alcohol molecule which double bonds are neither terminal nor pendant.

The alkoxylated steric stabilisers specified according to this invention can be used to provide particles of film-forming polymer which have water-insoluble cores which comprise addition polymer, that is, polymer prepared by the chain growth polymerisation of ethylenically unsaturated monomer. Most of the monomers commonly used in such polymerisations can be used, for example the C₁-C₁₂ (preferably the C₁-C₄) alkyl acrylates and methacrylates, styrene, (meth)allyl acrylates and methacrylates, glycidyl methacrylate and vinyl acetate. In addition, substantial quantities of water-soluble monomers may be used, provided that the core remains water-insoluble. A typical example of such a monomer is hydroxypropyl acrylate. It is possible to crosslink the polymer particles by using a monomer with two or more double bonds per molecule. One suitable monomer is trimethylolpropane triacrylate. Because of the inherent good stability to ionic species of aqueous dispersions of the particles made using the specified steric stabilisers, small proportions of ionisable monomers such as acrylic and methacrylic acids may be tolerated.

Such monomers will typically comprise no more than 5% or the mass of the core polymer.

The sheaths of the particles made using the specified steric stabilisers comprise polyoxyalkylene chains, that is, chains which are made up of oxyalkylene units of the general formula - (CR₁R₂-CH₂-O)- wherein R₁ and R₂ are independently hydrogen or C₁ to C₄ alkyl groups. The requirement that the particles be stable in aqueous dispersion dictates that the polyoxyalkylene chains will have an overall hydrophilicity. In practice, this means that most of the oxyalkylene units will be oxyethylene units, with a minor proportion of oxypropylene and oxybutylene units, the last-named two being used to adjust the degree of hydrophilicity of the chains. The oxypropylene and oxybutylene units are preferably located at one or both ends of the polyoxyalkylene chain. The chains may vary in length from 6 to 40 oxyalkylene units and are present in such quantity that the mass ratio of core to sheath is from 98:2 to 60:40. Preferred chain lengths are 8 to 25, more preferably 10 to 25, oxyalkylene units and preferred mass ratios are from 95:5 to 85:15. The very small particles are on average less than 100nm, preferably 20 to 80nm and more preferably 30 to 65nm in diameter.

It should be noted at this point that the mass of the core is considered to include the mass of any water-insoluble components which may be attached to the polyoxyalkylene chains. Such components typically comprise reactive groups and hydrophobic moieties. These are further discussed in the following paragraphs.

It is a requirement of this invention that as a result of using the steric stabiliser at least a portion of the polyoxyalkylene chains become chemically bonded to the core of film-forming material. This may be achieved by using the diethylenically unsaturated hydrophobic moieties of the steric stabiliser, which can react with the monomer of the core during the formation of the particles. Examples of particularly useful steric stabilisers of this type are the alkoxylated diethylenically unsaturated fatty alcohols, disclosed in copending Australian patent Application No. AU 67474/90.

It is permissible for the sheath of the particles also to have a proportion of polyoxyalkylene chains which are not chemically bonded to the core polymer. This may happen naturally as there will usually be a proportion of the abovementioned double bond-containing chains which will not react but which will be physically adsorbed. However, polyoxyalkylene chains which comprise no unsaturation may also be used. Typical examples are polyoxyalkylene chains which have at one end a hydrophobic moiety which lacks any ethylenic unsaturation. Typical examples of suitable compounds include block copolymers of polyoxybutylene and polyoxyethylene and nonyl phenol ethoxylates. Compounds of this type are commonly available, for example, the range of non-ionic surfactants sold by ICI Australia under the trade mark "Teric". The proportion of polyoxyalkylene chains which must be bonded to the core varies considerably according to such factors as core and sheath compositions and relative proportions of core and sheath. In some cases, only a small proportion need be bonded, in other cases a substantial majority.

It has been found that, as a general rule, at least 20% of the polyoxyalkylene chains should be bonded to the core. More preferably, 50% of the chains, and most preferably as many of the chains as possible are bonded to the core; 100% of bonded chains is theoretically possible but difficult to achieve in practice.

Aqueous dispersions of particles made using steric stabilisers specified by this invention are robust with respect to the presence of ionic species in comparison with ionically-stabilised particles, and no problems will be encountered as a result of the presence of such species as ionic catalyst residues. Moreover, the dispersions can tolerate the addition of ionic materials in quantities which are common in the art. For example, in the formulation of paint compositions, it is common to use ionic surfactants, for example as pigment dispersants. The presence of such species in art-recognised quantities does not affect the stability or properties of the dispersions.

Steric stabilisers selected according to the invention are used in aqueous media. The use can be illustrated by a process for the preparation of core-sheath particles of film-forming addition polymer by the polymerisation of ethylenically unsaturated monomer in aqueous medium in the presence of solvated alkoxylated hydrophobic moieties which comprise ethylenic double bonds wherein the alkoxylating moieties are polyoxyalkylene chains having a chain length of from 6 to 40 oxyalkylene units, the mass ratio of core to sheath is from 98:2 to 60:40 and polymerisation is initiated at under 40°C if very small particles are required.

In a typical process suitable for making very small particles, monomer, alkoxylated steric stabiliser, water and a peroxy compound are mixed to form a milky emulsion. The temperature of the emulsion is then reduced to below 40°C, preferably below 20°C and more preferably in the range of from 0-and polymerisation initiated by adding a reductant for the peroxy compound. The resulting exotherm is controlled to below 50°C, and preferably below 30°C using external cooling. The initial milkiness of the mixture reduces as the reaction proceeds such that a translucent product is formed by the end of the polymerisation period (1-2 hours). Sufficient stirring is used to keep the mixture homogeneous and temperature low and uniform.

In this process, the quantities of materials used typically range from a mass ratio of monomer to alkoxylated steric stabiliser of 50:50 to one of 92:8, and the mass ratio of monomer plus stabiliser to water is from 20:80 to 60:40.

In an especially preferred illustration of the use of the steric stabilisers, the process as hereinabove described may be performed as a seed-feed process, rather than as a single step process. The invention therefore provides a process as hereinabove defined, wherein the particles are formed in two stages, a seed stage and a feed stage, characterised in that
i) in the seed stage, the mass ratio of monomer to stabiliser is from 80:20 to 20:80 and the monomer plus stabiliser to water ratio is from 20:80 to 40:60;
ii) in the feed stage, the feed has a monomer to stabiliser ratio of from 75:25 to 99:1 and a monomer plus stabiliser to water ratio is from 40:60 to 90:10; and
iii) the mass ratio of seed stage monomer to feed stage monomer is 1:20 maximum.

The seed-feed process is generally carried out by one of two methods. In the first method, there is formed seed polymer particles to which an emulsified monomer feed is added. In the second method, there is formed a seed emulsion of unpolymerised monomer to which an emulsified monomer feed is added, polymerisation only being initiated when this feed is being added. A preferred technique here is to include one component of the polymerisation initiator in the seed emulsion and include the others in the feed.

The sterically stabilised particles of the invention may be used in aqueous dispersions as film-formers in coating compositions. The invention therefore also provides an aqueous coating composition which contains an aqueous dispersion of the sterically stabilised particles of film-forming material to which at least a portion of the polyoxyalkylene chains of an alkoxylated steric stabiliser selected according to this invention are bonded. The coating compositions may be prepared by blending standard ingredients such as pigments, extenders, antifoams, thickeners and fungicides into the dispersion in art-recognised quantities using known methods. The aqueous dispersions have high solids contents and the excellent rheology exhibited by the dispersions of very small particles ensures that the solids content of such dispersions need not be diluted, thus rendering unnecessary the addition of the usual quantities of rheology-modifying additives generally used in known coating compositions. The resulting coating films have good film build and properties. Accordingly this invention also provides an applied coating film formed from film-forming material to which at least a portion of the polyoxyalkylene chains of an alkoxylated steric stabiliser selected according to this invention are bonded.

The invention is further illustrated by the following examples in which all parts are expressed by mass.

### Example 1

The use of an alkoxylated steric stabiliser in the preparation of particles of about 50nm diameter, having a formulated core:sheath mass ratio of 88:12, the polyoxyalkylene chains having on average about 10 oxyethylene units. The process is a single stage process.

The following components were weighed into a reaction vessel:

| | |
|---|---|
| Steric stabiliser consisting of the "Ocenol" 110-130 mixture of C₁₈ straight chain fatty alcohols which have been ethoxylated with 10 moles ethylene oxide per mole of fatty alcohol | 12.50 parts |
| deionised water | 44.38 parts |
| methyl methacrylate | 27.95 parts |
| butyl acrylate | 9.55 parts |
| tert-butyl perbenzoate | 0.75 parts |
| ("Ocenol" 110-130 (ex Henkel KGaA) is a commercially-available blend of C₁₈ straight chain unsaturated alcohols having on average about 1.6 ethylenic double bonds per molecule. "Ocenol" is a trade mark). | |

The mixture was stirred and 30% w/w hydrochloric acid was added until a pH of less than 4 was achieved (0.2 parts was required). The mixture was cooled by means of an ice bath to less than 6⁰C and 4.13 parts of a 10% w/w aqueous solution of sodium erythorbate and then 0.75 parts of a 1% w/w aqueous solution of ferrous sulphate heptahydrate were added. Stirring was maintained as was external cooling to keep the exotherm temperature from exceeding 35⁰C. The peak temperature was reached at about 15 minutes after the erythorbate/ferrous sulphate addition and stirring was continued for a further two hours.

The product was a translucent dispersion with a weight solids content of 50%. Examination by electron microscopy revealed particles of fairly uniform particle diameter of about 50nm. Particle size measurements taken in a "Nanosizer" (trade mark) particle size measurement apparatus gave a diameter of 57nm with a polydispersity of 4.

The proportion of polyoxyalkylene chains reacted on to the particles was determined to be 25% by GPC analysis of peak height at the retention time of the unreacted (not covalently bonded) chains.

The rheology and solids content of the dispersion rendered it ideal for use in a coating composition. It was found that none of the conventional rheology modifiers were needed.

### Viscosities were found to be as follows:

| Viscosity ICI cone and plate viscometer) | |
|---|---|
| at 10,000s⁻¹ | 1.1 poise |

| Viscosity (Haake RV100 viscometer) in the range | |
|---|---|
| 10-100s⁻¹ | 10 poise |

This shows that the dispersion had rheological characteristics which were close to Newtonian in the low to medium shear rate range. In a paint which utilised the dispersion as a film-former, this gave very favourable brush pick-up, in-can appearance and excellent flow out, leading to the absence or near absence of brush marks in final film. The dispersion shear-thinned to about 1 poise at high shear rates (typical of those encountered during paint brushing), and this endowed the paint with excellent brushing properties.

Paint compositions formulated using the dispersion as film-former exhibited these excellent properties without the need to use added rheology-modifying agents. This additionally had the effect of keeping high the solids content and ensuring good film build on application.

### Example 2

The use of an alkoxylated steric stabiliser in the preparation of particles of about 45nm diameter, having a formulated core:sheath mass ratio of 90:10, the polyoxyalkylene chains having an average about 10 oxyethylene units. The process is a seed-feed process wherein no polymerisation is initiated until the feed has begun (hereinafter referred to as "Type A").

The following materials and proportions were used:

| | Seed Stage | Feed Stage |
|---|---|---|
| Steric stabiliser as in Example 1 | 5.172 | 3.000 |
| methyl methacrylate | 4.724 | 21.348 |
| butyl acrylate | 3.036 | 13.720 |
| t-butyl perbenzoate | 0.856 | --- |
| solution A¹ | --- | 4.708 |
| solution B² | 0.856 | --- |
| deionised water | 28.460 | 14.120 |

| | | |
|---|---|---|
| ¹ A solution of 1 part sodium ethoxylate in 10 parts deionised water | | |
| ² Solution of 1 part ferrous sulphate heptahydrate in 99 parts deionised water | | |

The seed stage materials were mixed, stirred and adjusted in pH to 4 with 30% w/w hydrochloric acid. The mixture was then cooled to 7°C and the feed stage was added over a period of 1 hour. During this period, the mixture exothermed but the temperature was kept below 30⁰C by means of external cooling.

The product was a translucent dispersion of polymer. The weight solids of the dispersion was 51% and the particle diameter was 45nm as measured by small angle x-ray scattering (SAXS) and 65nm, polydispersity 5, as measured by "Nanosizer" apparatus.

### Example 3

The use of an alkoxylated steric stabiliser in a modified two stage preparation of particles of about 50nm diameter, having a formulated core:sheath mass ratio of 89:11, the polyoxyalkylene chains having on average about 9.3 oxyethylene units. This example was a Type A seed-feed process (see Example 2) and ethoxylated methacrylic acid provided part of the sheath.

Example 2 was repeated, except that part of the alkoxylated steric stabiliser used in the feed stage was replaced by ethoxylated methacrylic acid.

| | Seed Stage | Feed Stage |
|---|---|---|
| Steric stabiliser as in Example 1 | 5.172 | 0.548 |
| ethoxylated methacrylic acid¹ | --- | 2.452 |

| | | |
|---|---|---|
| ¹ "Blemmer" (trade mark) PE350 ex Nippon Oils and Fats Co. Ltd. was used. and that the mixture was maintained at below 30°C. | | |

The product was a translucent dispersion of polymer particles. The weight solids of the dispersion was 51% and particle diameter was 50nm by SAXS and 85nm with a polydispersity of 3 by "Nanosizer" apparatus.

### Example 4

The use of an alkoxylated steric stabiliser in the preparation of particles of about 57nm diameter, having a formulated core:sheath mass ratio of 92:8, the polyoxyalkylene chains having on average about 10 ethylene oxide units. This example uses a Type A seed-feed process (see Example 2).

The following materials and quantities were used:

| | Seed Stage | Feed Stage |
|---|---|---|
| Steric stabiliser as used in Example 1 | 2.028 | 4.348 |
| methyl methacrylate | 1.760 | 23.060 |
| butyl acrylate | 1.280 | 17.526 |
| t-butyl perbenzoate | 0.892 | --- |
| solution A¹ | --- | 4.906 |
| solution B¹ | 0.892 | --- |
| deionised water | 10.004 | 33.304 |

| | | |
|---|---|---|
| ¹ These are the same as those used in Example 2 The method used was that of Example 2. | | |

The result was a translucent dispersion of polymer particles. The weight solids of the dispersion was 51% and particle diameter was 57nm (as measured by electron microscopy) 70nm (polydispersity 3) (by "Nanosizer" apparatus). NMR studies showed that 45% of the polyoxyalkylene chains were covalently bonded to the particles.

### Example 5

The use of an alkoxylated steric stabiliser in the preparation of particles of polymer of about 68nm diameter, having a formulated core:sheath mass ratio of 90:10, the polyoxyalkylene chains having on average about 10 ethylene oxide units. In this example, there is used a seed-feed process wherein the seed stage is polymerised prior to the addition of the feed stage. This is hereinafter referred to as a "Type B" process.

The materials and total quantities of Example 2 were used, but with some differences as to the quantities used at particular stages in the process, as shall be apparent from the following description of the method.

The seed stage of Example 2, from which the t-butyl perbenzoate had been omitted, was cooled to 7°C and its pH adjusted to 3.0. To this cooled seed stage, 0.155 parts of Solution B were added. Polymerisation commenced with this addition and the mixture was allowed to exotherm and then allowed to cool to room temperature. The remaining solution and t-butyl perbenzoate were added to the seed stage and the remaining Solution A was added to the feed stage and the feed stage was added over a period of 1 hour.

The resulting translucent dispersion of polymer particles had a weight solids content of 51% and the particle diameter, as measured by "Nanosizer" apparatus, was 68nm (polydispersity 3).

### Example 6

The use of an alkoxylated steric stabiliser in the preparation of particles of polymer of 65nm diameter, having a formulated core:sheath mass ratio of 87.5:12.5, the polyoxyalkylene chains having an average about 10 ethylene oxide units. In this example, there is used a seed-feed process of Type A (see Example 2) and there is used a single monomer (styrene).

The materials and quantities used were as follows:

| | Seed Stage | Feed Stage |
|---|---|---|
| Steric stabiliser as used in Example 1 | 5.172 | 5.028 |
| styrene | 7.759 | 33.041 |
| t-butyl perbenzoate | 0.816 | --- |
| solution A¹ | --- | 4.488 |
| solution B¹ | 0.816 | --- |
| deionised water | 28.540 | 14.340 |

| | | |
|---|---|---|
| ¹ As used in Example 2 | | |

The preparation was carried out as described in Example 3 and the product was a translucent dispersion of polymer particles of weight solids content 51%. The particle size, as determined by "Nanosizer" apparatus was 65nm (polydispersity 3).

### Example 7

The use of an alkoxylated steric stabiliser in the preparation of particles of polymer of 47nm diameter, having a formulated core:sheath mass ratio of 84:16, the polyoxyalkylene chains having on average about 10 ethylene oxide units. In this example, there is used a seed-feed process of Type A (see Example 2) and there is used a single monomer (butyl acrylate).

The materials and quantities used were as follows:

| | Seed Stage | Feed Stage |
|---|---|---|
| Steric stabiliser as used in Example 1 | 5.172 | 6.078 |
| butyl acrylate | 7.759 | 25.991 |
| t-butyl perbenzoate | 0.675 | --- |
| solution A¹ | --- | 3.713 |
| solution B¹ | 0.675 | --- |
| deionised water | 28.822 | 12.115 |

| | | |
|---|---|---|
| ¹ As used in Example 2 | | |

The preparation was carried out as described in Example 3 and the product was a translucent dispersion of polymer particles of weight solids content 45%. The particle size, as determined by "Nanosizer" apparatus was 47nm (polydispersity 4).

### Example 8

The use of an alkoxylated steric stabiliser in the preparation of particles of polymer of about 82nm diameter having a formulated core:sheath mass ratio of 90:10, the polyoxyalkylene chains having on average about 10 ethylene oxide units. This example was a Type A seed-feed process and utilises an adhesion-promoting monomer.

The materials and quantities used were as follows:

| | Feed Stage | Seed Stage |
|---|---|---|
| Steric stabiliser as used in Example 1 | 5.172 | 3.161 |
| methyl methacrylate | 3.917 | 18.129 |
| butyl acrylate | 3.687 | 17.061 |
| t-butyl perbenzoate | 0.873 | --- |
| solution A¹ | --- | 4.804 |
| solution B¹ | 0.873 | --- |
| deionised water | 28.426 | 13.024 |
| adhesion-promoting monomer² | --- | 0.873 |

| | | |
|---|---|---|
| ¹ As used in Example 2 | | |
| ² "Sipomer" (trade mark WAM ex Alcolac Inc was used | | |

The method used in this preparation was that of Example 3. The result was a translucent dispersion of polymer particles of weight solids content 52%. The particle size, as measured by "Nanosizer" apparatus, was 82nm (polydispersity 4).

### Example 9

The use of an alkoxylated steric stabiliser in the preparation of polymer particles of about 59nm diameter, having a formulated core:sheath mass ratio of 90:10, the polyoxyalkylene chains having on average about 10 ethylene oxide units. In this example, an ionic initiation system was used.

Example 2 was repeated but with the t-butyl perbenzoate and solution A of that example replaced respectively by identical quantities of ammonium persulphate and a solution of 1 part sodium metabisulphite to 5 parts deionised water.

The product was a translucent dispersion of polymer. The weight solids of the dispersion was 51% and the particle diameter was 59nm, polydispersity 4 as measured by "Nanosizer" apparatus.

### Example 10

The use of an aqueous dispersion of sterically stabilised particles in the preparation of a semi-gloss coating composition.

The following materials and quantities were used:

| | | Parts |
|---|---|---|
| A. | propylene glycol | 9.167 |
| | opaque polymer particles¹ | 12.488 |
| | ammonia solution | 0.500 |
| | antifoam² | 0.300 |
| | dispersant³ | 0.117 |
| | dispersant⁴ | 0.167 |
| B. | titanium dioxide pigment⁵ | 25.439 |
| | silica extender⁶ | 1.000 |
| C. | aqueous dispersion (from Example 3) | 49.291 |
| | fungicide⁷ | 0.080 |
| | thickener⁸ | 1.450 |

| | | |
|---|---|---|
| ¹ "Ropaque" (trademark) OP62 ex Rohm and Haas Co was used. | | |
| ² "Bevaloid" (trade mark) 4226 ex Bevaloid Australia was used. | | |
| ³ "Orotan" (trade mark) 731 ex Rohm and Haas Co was used. | | |
| ⁴ "Triton (trade mark) X405 ex Rohm and Haas was used. | | |
| ⁵ "Tioxide" (trade mark) RHD2 ex Tioxide Australia was used. | | |
| ⁶ "Celatom" (trade mark) MW27 ex Eagle Picher was used. | | |
| ⁷ "Proxel" (trade mark) GXL ex ICI Australia was used. | | |
| ⁸ QR708 ex Rohm and Haas was used. | | |

The A stage materials were mixed and the B stage materials added thereto. The mixture was stirred for 15 minutes at high speed and the C stage materials were then added with moderate stirring.

The paint when applied exhibits good early water resistance, fast dry, excellent washability with conventional household cleaner, improved opacity over that exhibited by conventional systems, good adhesion to aged alkyd enamel and low odour.

The coating when applied exhibited a richer fuller finish compared to conventional waterborne systems, as a result of its higher volume solids. The coating had good brush, roller and spray application with good flowout of imperfections such as brush marks.

## Claims

1. The use of a steric stabiliser containing polyoxyalkylene chains to impart a core-sheath structure to particles of film-forming polymer to enable them to form a stable aqueous dispersion suitable for use in an aqueous coating composition wherein the core part of the structure contains a film-forming addition polymer and the sheath part contains the polyoxyalkylene chains and wherein
a) the polyoxyalkylene chains have an average length of 6 to 40 oxyalkylene units per chain,
b) at least 20% of the chains, are covalently bonded to a core and
c) sufficient steric stabiliser is used to ensure that the mass ratio of core to sheath is from 98:2 to 60:40
in which the polyoxyalkylene chains are moieties in an alkoxylated ethylenically unsaturated fatty alcohol which alcohol contains 18 carbon atoms and in which the ethylenic unsaturation is provided by more than one ethylenic double bond per fatty alcohol molecule which double bonds are neither terminal nor pendant.

2. The use of a steric stabiliser as claimed in Claim 1 in which the ethylenic unsaturation in the fatty alcohol is provided by two double bonds.

3. The use of a steric stabiliser as claimed in Claim 2 in which the fatty alcohol is linoleyl alcohol.

4. The use of a steric stabiliser as claimed in Claim 1 or Claim 2 in which the fatty alcohol is a mixture of linoleyl and oleyl alcohols.

5. The use of a steric stabiliser as claimed in any one of Claims 1 to 4 in which the polyoxyalkylene chains are polyoxyethylene chains.

6. Sterically stabilised particles of film-forming polymer having a core-sheath structure able to form a stable aqueous dispersion suitable for use in an aqueous coating composition wherein the core part of the structure contains a film-forming addition polymer and the sheath part contains polyoxyalkylene chains and
a) the polyoxyalkylene chains have an average length of 6 to 40 oxyalkylene units per chain,
b) at least 20% of the chains are covalently bonded to a core and
c) the mass ratio of core to sheath is from 98:2 to 60:40 ,
in which the polyoxyalkylene chains are moieties derived from alkoxylated ethylenically unsaturated fatty alcohol containing 18 carbon atoms and in which the ethylenic unsaturation is provided by more than one ethylenic double bond per fatty alcohol molecule which double bond is neither terminal nor pendant.

7. Sterically stabilised particles as claimed in Claim 6 in which the ethylenic unsaturation is provided by two double bonds.

8. Sterically stabilised particles as claimed in Claim 6 or Claim 7 in which the fatty alcohol is linoleyl alcohol.

9. Sterically stabilised particles as claimed in Claim 6 or Claim 7 in which the fatty alcohol is a mixture of linoleyl and oleyl alcohols.

10. Sterically stabilised particles as claimed in any one of Claims 6 to 9 in which polyoxyalkylene chains are polyoxyethylene chains.

11. An aqueous coating composition containing an aqueous dispersion of sterically stabilised particles according to any of claims 6 to 10.

12. An applied coating film formed from an aqueous coating composition according to claim 11.

## Patentansprüche

1. Verwendung eines sterischen Stabilisators, welcher Polyoxyalkylenketten enthält, um Teilchen aus filmbildendem Polymer eine Struktur mit umhülltem Kern zu verleihen, und um diesen die Bildung einer stabilen wäßrigen Dispersion zu ermöglichen, die zur Verwendung in einer wäßrigen Beschichtungszusammensetzung geeignet ist, worin der Kernteil der Struktur ein filmbildendes Additionspolymer und der Hüllenteil die Polyoxyalkylenketten enthält und worin
a) die Polyoxyalkylenketten eine mittlere Länge von 6 bis 40 Oxyalkyleneinheiten pro Kette aufweisen,
b) mindestens 20% der Ketten kovalent an den Kern gebunden sind und
c) ausreichend sterischer Stabilisator verwendet wird, damit das Massenverhältnis von Kern zu Hülle 98:2 bis 60:40 beträgt,
worin die Polyoxyalkylenketten Einheiten in einem alkoxylierten ethylenisch ungesättigten Fettalkohol sind, wobei der Alkohol 18 Kohlenstoffatome enthält, und worin die ethylenische Ungesättigtheit durch mehr als eine ethylenische Doppelbindung pro Fettalkoholmolekül hervorgerufen wird, wobei die Doppelbindungen weder endständig noch in Seitengruppen Vorliegen.

2. Verwendung eines sterischen Stabilisators nach Anspruch 1, worin die ethylenische Ungesättigtheit im Fettalkohol durch zwei Doppelbindungen hervorgerufen wird.

3. Verwendung eines sterischen Stabilisators nach Anspruch 2, worin der Fettalkohol Linoleylalkohol ist.

4. Verwendung eines sterischen Stabilisators nach Anspruch 1 oder Anspruch 2, worin der Fettalkohol ein Gemisch aus Linoleyl- und Oleylalkohol ist.

5. Verwendung eines sterischen Stabilisators nach einem der Ansprüche 1 bis 4, worin die Polyoxyalkylenketten Polyoxyethylenketten sind.

6. Sterisch stabilisierte Teilchen aus filmbildendem Polymer mit einer Struktur aus umhülltem Kern, die geeignet sind, eine stabile wäßrige Dispersion zu bilden, welche zur Verwendung in einer wäßrigen Beschichtungszusammensetzung geeignet ist, worin der Kernteil der Struktur ein filmbildendes Additionspolymer und der Hüllenteil Polyoxyalkylenketten enthält und
a) die Polyoxyalkylenketten eine mittlere Länge von 6 bis 10 Oxyalkyleneinheiten pro Kette aufweisen,
b) mindestens 20 % der Ketten kovalent an den Kern gebunden sind und
c) das Massenverhältnis von Kern zu Hülle 98:2 bis 60:40 beträgt,
worin die Polyoxyalkylenketten Einheiten sind, die sich vom alkoxylierten ethylenisch ungesättigten Fettalkohol, der 18 Kohlenstoffatome enthält, ableiten und worin die ethylenische Ungesättigtheit durch mehr als eine Doppelbindung pro Fettalkoholmolekül hervorgerufen wird, wobei die Doppelbindung weder endständig nach in Seitengruppen vorliegt.

7. Sterisch stabilisierte Teilchen nach Anspruch 6, worin die ethylenische Ungesättigtheit durch zwei Doppelbindungen hervorgerufen wird.

8. Sterisch stabilisierte Teilchen nach Anspruch 6 oder Anspruch 7, worin der Fettalkohol Linoleylalkohol ist.

9. Sterisch stabilisierte Teilchen nach Anspruch 6 oder Anspruch 7, worin der Fettalkohol ein Gemisch aus Linoleyl- und Oleylalkohol ist.

10. Sterisch stabilisierte Teilchen nach einem der Ansprüche 6 bis 9, worin die Polyoxyalkylenketten Polyoxyethylenketten sind.

11. Wäßrige Beschichtungszusammensetzung, welche eine wäßrige Dispersion von sterisch stabilisierten Teilchen nach einem der Ansprüche 6 bis 10 enthält.

12. Aufgebrachter Beschichtungsfilm, gebildet aus einer wäßrigen Beschichtungszusammensetzung nach Anspruch 11.

## Revendications

1. Utilisation d'un stabilisant stérique contenant des chaînes polyoxyalkylénées pour fournir une structure coeur-enveloppe à des particules de polymères formant un film leur permettant de former une dispersion aqueuse stable adaptée à une utilisation dans une composition de revêtements aqueux dans laquelle le coeur de la structure contient un polymère d'addition formant un film et dans laquelle la partie appelée enveloppe contient les chaînes polyoxyalkylénées et dans laquelle :
a) les chaînes polyoxyalkylénées ont une longueur moyenne de 6 à 40 unités oxyalkylène par chaîne,
b) au moins 20 % des chaînes sont liées de manière covalente au coeur de la structure et
c) un stabilisant stérique suffisant est utilisé afin d'assurer un rapport en poids du coeur par rapport à l'enveloppe de 98/2 à 60/40
dans laquelle les chaînes polyoxyalkylénées sont des résidus d'un alcool gras à insaturation éthylénique alcoxylé, ledit alcool contient 18 atomes de carbone et dans lequel l'insaturation éthylénique est fournie par plus d'une double liaison éthylénique par molécule d'alcool gras, ces doubles liaisons n'étant ni terminales, ni pendantes.

2. Utilisation d'un stabilisant stérique selon la revendication 1 dans laquelle l'insaturation éthylénique dans l'alcool gras est fourni par deux doubles liaisons.

3. Utilisation d'un stabilisant stérique selon la revendication 2 dans laquelle l'alcool gras est l'alcool linoléique.

4. Utilisation d'un stabilisant stérique selon l'une des revendications 1 ou 2 dans laquelle l'alcool gras est un mélange d'alcool linoléique et oléique.

5. utilisation d'un stabilisant stérique selon l'une des revendications 1 à 4 dans laquelle les chaînes polyoxyalkylénées sont des chaînes polyoxyéthylénées.

6. Particules stabilisées stériquement d'un polymère formant un film ayant une structure coeur-enveloppe capable de former une dispersion aqueuse stable adaptée à une utilisation dans une composition de revêtement aqueux dans laquelle le coeur de la structure contient un polymère d'addition formant un film et dans laquelle la partie appelée enveloppe contient des chaînes polyoxyalkylénées et :
a) les chaînes polyoxyalkylénées ont une longueur moyenne de 6 à 40 unités oxyalkylène par chaîne,
b) au moins 20 % des chaînes sont liées de manière covalente au coeur de la structure et
c) le rapport en poids du coeur par rapport à l'enveloppe est de 98/2 à 60/40
dans laquelle les chaînes polyoxyalkylénées sont des résidus dérivés d'alcool gras à insaturation éthylénique alcoxylé contenant 18 atomes de carbone et dans lequel l'lnsaturation éthylénique est fournie par plus d'une double liaison éthylénique par molécule d'alcool gras, ces doubles liaisons n'étant ni terminales ni pendantes.

7. Particules stabilisées stériquement selon la revendication 6 dans lesquelles l'insaturation éthylénique est fourni par 2 double liaisons.

8. Particules stabilisées stériquement selon la revendication 6 ou 7 dans lesquelles l'alcool gras est l'alcool linoléique.

9. Particules stabilisées stériquement selon la revendication 6 ou 7 dans lesquelles l'alcool gras est un mélange d'alcool linoléique et oléique.

10. Particules stabilisées stériquement selon l'une des revendications 6 à 9 dans lesquelles les chaînes polyoxyalkylénées sont des chaînes polyoxyéthylénées.

11. Composition de revêtement aqueux contenant une dispersion aqueuse de particules stabilisées stériquement selon l'une des revendications 6 à 10.

12. Film de revêtement appliqué formé à partir d'une composition de revêtement aqueux selon la revendication 11.
